Europäisches Patentamt

European Patent Office

Office européen des brevets

(19)

(11) Numéro de publication: **0 120 797**
**B1**

(12) **FASCICULE DE BREVET EUROPÉEN**

(45) Date de publication du fascicule du brevet:
02.09.87

(51) Int. Cl.⁴: **B 01 D 33/10, F 16 J 15/44**

(21) Numéro de dépôt: **84420033.7**

(22) Date de dépôt: **27.02.84**

(54) Dispositif de retenue d'une phase liquide entre une paroi et une pièce tournante la traversant.

(30) Priorité: **28.02.83 FR 8303633**

(43) Date de publication de la demande:
**03.10.84 Bulletin 84/40**

(45) Mention de la délivrance du brevet:
**02.09.87 Bulletin 87/36**

(84) Etats contractants désignés:
**DE GB IT NL**

(56) Documents cité:
**DE-A-2 605 929**
**DE-B-1 111 002**
**FR-A-2 097 630**
**GB-A-996 665**
**US-A-3 085 809**

**Le dossier contient des informations techniques présentées postérieurement au dépôt de la demande et ne figurant pas dans le présent fascicule.**

(73) Titulaire: **ALUMINIUM PECHINEY, 23, rue Balzac, F-75008 Paris (FR)**

(72) Inventeur: **Barra, Jean, "Lou Claou", F-13120 Gardanne (FR)**

(74) Mandataire: **Gaucherand, Michel, PECHINEY 28, rue de Bonnel, F-69433 Lyon Cedex 3 (FR)**

## Description

L'invention concerne un dispositif de retenue,entre une paroi fixe et une pièce tournante la traversant, d'une phase liquide éventuellement chargée en matériaux solides constituant une suspension, dans le but de réaliser un joint éliminant les frottements en acceptant toutefois une fuite limitée de la phase liquide.

Depuis longtemps déjà, il est bien connu que toute machine tournante munie d'un arbre d'entraînement en contact partiel ou total avec une phase liquide doit être équipée d'un dispositif d'étanchéité placé entre la partie tournante et une partie fixe de ladite machine.

Quand la machine tournante dispose d'un arbre d'entraînement de petit diamètre, comme c'est le cas pour les arbres de pompes par exemple, des dispositifs d'étanchéité tout spécialement adaptés ont été mis au point et développés depuis de nombreuses années. C'est ainsi qu'ont été employés, et le sont encore aujourd'hui, des dispositifs anciens à "Presse-étoupe". Mais, des dispositifs plus récents et beaucoup plus élaborés, également utilisés, sont constitués, par exemple, par des bagues ou soufflets en matières spéciales ou enrobés de matières spéciales comme les élastomères tels que certains d'entre eux sont décrits dans les brevets américains US. 3 269 738 et 3 480 285, ou encore des joints rotatifs d'étanchéité de contact comme l'un d'entre eux est décrit dans le brevet britannique 1 051 021.

De tels dispositifs répondent bien aux préoccupations de l'homme de l'art, quand il faut disposer, pour les machines tournantes ayant un arbre d'entraînement de petit diamètre, d'un dispositif étanche et souple de façon à recevoir un mouvement axial d'amplitude limitée tout en conservant une étanchéité efficace.

Dès lors qu'une machine tournante dispose d'un arbre d'entraînement de grand diamètre ayant par exemple un diamètre d'au moins 500 mm, partiellement ou totalement immergé dans une phase liquide comme c'est le cas en particulier des technologies de filtration, du type filtres rotatifs à disques par exemple, un dispositif d'étanchéité entre les parties tournante et fixe d'une telle machine est nécessaire et peut s'inspirer des dispositifs d'étanchéité destinés aux arbres d'entraînement de petit diamètre. Très appréciés dans le domaine de la séparation des phases liquide et solide de suspensions résultant des attaques de minerais, selon les procédés hydrométallurgiques, de tels filtres rotatifs sont décrits par exemple dans "Chemical Engineers Handbooks" page 978 à 981, par John H. PERRY, Edition MC. GRAW HILL BOOK Company 1950, ou bien encore dans le brevet américain US. 3 948 779.

Tels qu'ils sont décrits, les filtres rotatifs à disques comportent une série de disques fixés parallèlement sur un arbre horizontal creux, dans lequel on pratique une aspiration. Chaque disque est formé de plusieurs secteurs indépendants garnis de toiles métalliques et/ou de sachets textiles filtrants, raccordés à l'arbre horizontal creux précité.

Lors de l'opération de filtration, les disques, munis de leurs secteurs, plongent dans une auge d'alimentation en suspension à filtrer, la phase solide étant collée par aspiration sur les toiles filtrantes, tandis que la phase liquide séparée s'écoule dans l'arbre horizontal collecteur, au moyen de raccords existant entre chaque secteur et l'arbre lui-même. La phase solide disposée sur la toile filtrante est ensuite essorée lors du passage à l'air libre, puis éliminée par grattage des surfaces filtrantes au moyen d'une racle.

Mais, la réalisation en grand diamètre de ces dispositifs d'étanchéité destinés à ces machines tournantes, est très coûteuse ainsi d'ailleurs que leur entretien ultérieur.

Plus que cela, les dispositifs d'étanchéité agrandis offrent une moindre efficacité car ils exigent des vitesses de rotation beaucoup plus faibles tout en consommant en toute proportion, une quantité d'énergie beaucoup plus importante.

Tous ces inconvénients ont dès lors conduit la demanderesse à étudier et à créer un dispositif de retenue d'une phase liquide en constituant un joint à fuite limitant le passage de cette phase, dispositif industriel mieux adapté au problème posé par le passage dans une paroi fixe, d'une pièce tournante ou d'un arbre d'entraînement partiellement ou totalement immergé dans la phase liquide pouvant comporter des matériaux solides en suspension.

Selon l'invention, le dispositif de retenue d'une phase liquide éventuellement chargée en matériaux solides, constituant une suspension, entre une paroi fixe et une pièce tournante la traversant, se caractérise en ce que ce dispositif comporte:

a) une cloison solidaire de la pièce tournante dont la périphérie présente au moins une portée plane perpendiculaire à l'axe de rotation de la pièce tournante et une portée cylindrique dont l'axe de révolution est confondu avec l'axe de rotation de ladite pièce tournante et adjacente à la portée plane,

b) un anneau de retenue prenant position sur la portée plane et la portée cylindrique de la cloison solidaire de la pièce tournante,

c) une virole solidaire de la paroi fixe, de diamètre interne au moins égal au diamètre externe de l'anneau, munie d'un moyen de positionnement longitudinal sur la paroi, selon l'axe de rotation de la pièce tournante qui traverse cette paroi, d'un moyen de centrage par rapport à cette même pièce tournante et à l'anneau de retenue, enfin d'un moyen de blocage interdisant tout déplacement de la virole.

La pièce tournante à laquelle s'applique le dispositif selon l'invention peut avoir une dimension transversale quelconque, c'est-à-dire disposer d'un diamètre qui peut aller depuis celui d'un arbre classique de pompes jusqu'à celui des filtres rotatifs par exemple.

Mais ce dispositif est plus particulièrement intéressant pour des pièces tournantes de diamètre au moins égal à 500 mm. De plus, la pièce tournante, qui est un arbre d'entraînement, dispose en général d'une section circulaire, mais peut avoir une section polygonale ou elliptique.

La cloison, de forme circulaire, solidaire de la pièce tournante est préférentiellement une surface plane située dans un plan perpendiculaire à la pièce tournante. Mais cette cloison peut être également une surface plus élaborée, telle que tronconique, cylindroconique, hémisphérique, convexe ou concave... La cloison précitée comporte également sur sa périphérie au moins une surface plane servant de portée située dans un plan perpendiculaire à l'axe de rotation de ladite pièce. A la portée précitée est fixée une portée cylindrique dont l'axe de révolution est confondu avec l'axe de rotation de la pièce tournante.

Dans l'espace défini par la ou les portées et la surface concentrique, se trouve un anneau de retenue qui prend appui sur la ou les portees. Cet anneau peut être réalisé en un matériau métallique usiné ou moulé, par exemple à partir de fonte, aciers ordinaires ou spéciaux, d'alliages légers à base d'aluminium, de métallurgie des poudres. Mais cet anneau peut également être réalisé par moulage de matériaux polymères naturels ou synthétiques, tels que les caoutchoucs, les polyamides, polyimides, polyesters, polymères halogénés.

L'anneau de retenue peut avoir une section de type aussi divers que une section carrée, rectangulaire, circulaire ou ayant la forme des lettres L, T, U.

La virole, qui est une surface cylindrique, dispose d'un diamètre interne au moins égal ou légérement supérieur au diamètre externe de l'anneau. Cette différence de diamètre dépend essentiellement de la taille des solides contenus dans la phase liquide et est nulle quand la phase liquide est exempte de matières solides. Par conséquent, la fuite, qui est limitée ou nulle se produit entre ces deux pièces. Le recouvrement de l'anneau de retenue par la virole solidaire de la paroi fixe circulaire peut être partiel ou total, mais il doit au moins être assuré dans tout le secteur de ladite paroi fixe circulaire qui est immergé dans la suspension à filtrer. La position de cette virole par rapport à l'anneau de retenue peut être déterminée par des moyens de réglages longitudinaux et transversaux de types connus. Dès lors que le réglage est obtenu, la virole est maintenue en place, par des moyens de blocage également bien connus. La virole peut avoir une section de type aussi divers qu'une section en I, en L, en T, en U inversé.

Selon une variante de l'invention, qui peut se révéler intéressante dans certains cas particuliers pour diminuer encore la fuite au joint, en tolérant un léger frottement, la virole ou la cloison peuvent être réalisées en matériau flexible tel que par exemple en caoutchouc.

L'invention sera mieux comprise grâce à la description chiffrée des figures illustratives 1 à 6.

La figure 1 représente en coupe verticale le dispositif, selon l'invention, de retenue d'une phase liquide entre une paroi fixe et une pièce tournante la traversant.

La figure 2 représente en coupe verticale un autre-dispositif, selon l'invention, de retenue d'une phase liquide entre une paroi fixe et une pièce tournante la traversant.

Les figures 3 à 6 représentent en coupe verticale simplifiée des variantes du dispositif selon l'invention.

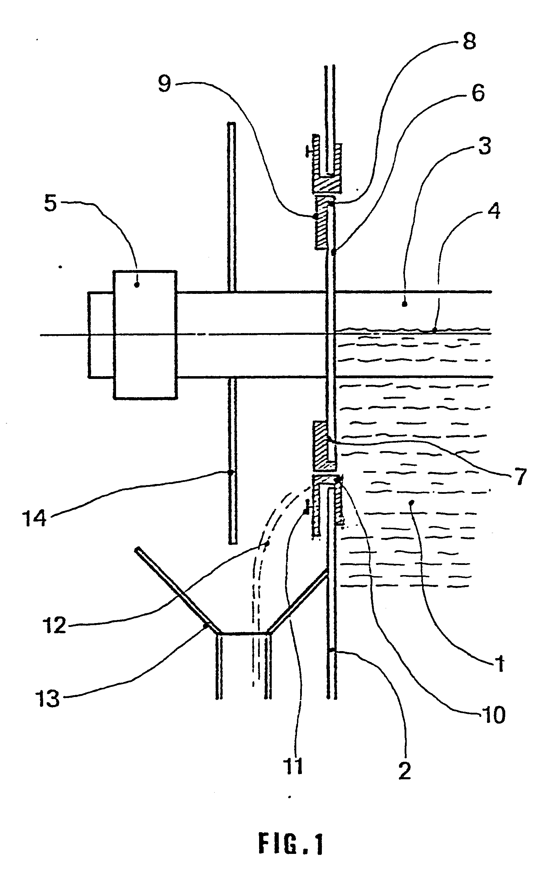

Selon la figure 1, le dispositif selon l'invention est destiné à retenir une suspension (1) dont il faut séparer les phases liquide et solide, entre une paroi fixe (2), élément de cuve d'un filtre rotatif à disques, et une pièce tournante (3) la traversant, arbre d'entraînement de ce filtre maintenu en place par le palier (5) et qui est partiellement immergé dans la suspension (1) selon le niveau (4).

Le dispositif comprend une cloison plane (6) solidaire de la pièce tournante (3) arbre d'entraînement, et perpendiculaire à son axe, dont la périphérie présente une surface plane (7) perpendiculaire à son axe formant une portée et une surface concentrique (8) assujettie à la portée. Un anneau de retenue (9) de section en L, prend position sur la portée (7) et la surface concentrique (8) de la cloison (6). Une virole (10),de section en U, de diamètre interne légèrement supérieur au diamètre externe de l'anneau (9), est munie d'un moyen de positionnement connu (11) longitudinal et transversal sur la paroi (2) fixe. Dès lors, la faible fraction de la phase liquide s'écoule selon (12) dans un moyen de récupération (13), assurant le recyclage de cette fraction à l'intérieur de la cuve du filtre rotatif à disques. Eventuellement, le palier (5) peut être protégé des rares projections au moyen d'un écran (14) solidaire de l'arbre d'entraînement (3).

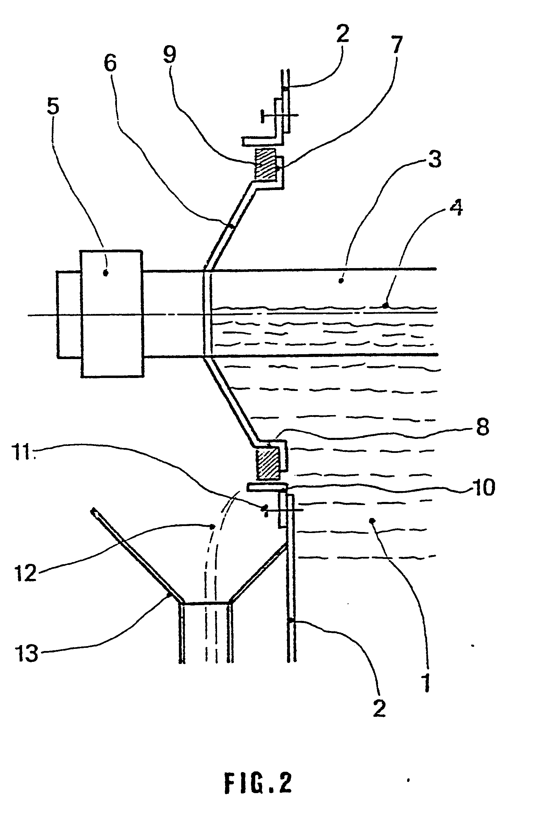

Selon la figure 2, le dispositif selon l'invention est destiné à retenir une suspension (1) dont il faut séparer les phase liquide et solide, cette retenue devant se faire entre la paroi fixe (2) de la cuve d'un filtre rotatif à disques et l'arbre d'entraînement (3) (pièce tournante) la traversant, maintenu en place par le palier (5), et qui est partiellement immergé dans la suspension (1) selon le niveau (4).

Le dispositif comprend la cloison (6) ayant l'aspect d'une surface tronconique solidaire de l'arbre d'entraînement (3) et coaxiale à cet arbre. La périphérie de la cloison (6) présente une surface plane (7) faisant office de portée et une surface concentrique (8) assujettie à la portée. L'anneau de retenue (9) de section carrée prend position sur la portée (7) et la surface concentrique (8), de la cloison (6). La virole (10), de section en L, est munie d'un moyen de positionnement connu (11) transversal et longitudinal sur la paroi fixe (2). La fraction liquide (12) s'échappant par l'interstice compris entre l'anneau de retenue (9) et la virole (10) est recueillie par un moyen de récupération (13) assurant le recyclage de cette fraction à l'intérieur de la cuve du filtre rotatif à disques.

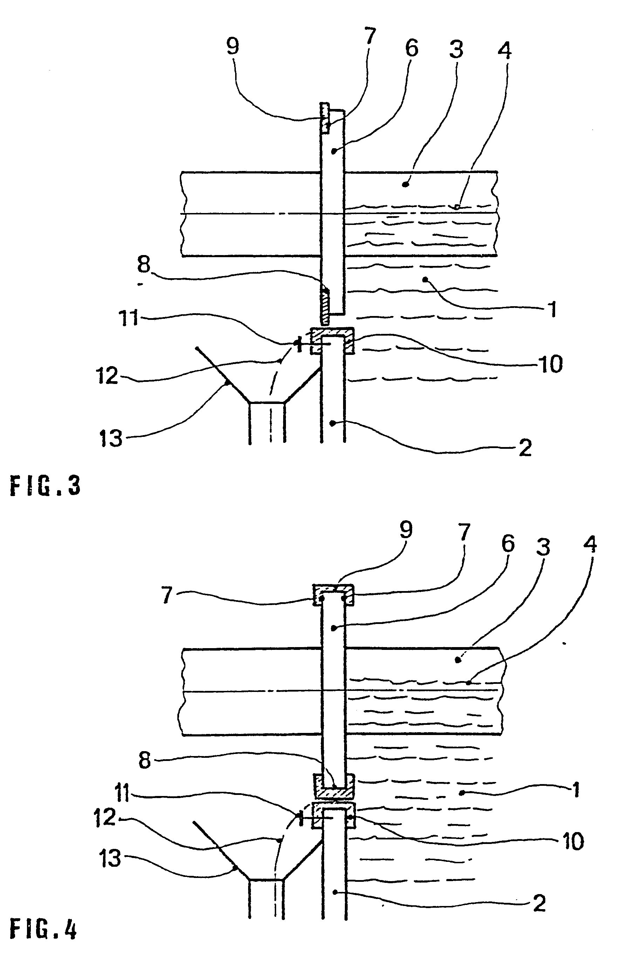

Selon la figure 3, le dispositif est destiné à effectuer une retenue de la phase liquide entre la paroi fixe (2) et la pièce tournante (3) qui la traverse, partiellement immergée dans la phase liquide (1) selon le niveau (4).

Le dispositif comprend la cloison (6) ayant l'aspect d'une surface plane, solidaire de la pièce tournante (3) et perpendiculaire à son axe. La périphérie de la cloison (6) présente une surface plane (7) jouant le rôle de portée et une surface concentrique (8) assujettie à la portée (7). L'anneau de retenue (9), de section rectangulaire ou en I, prend position sur la portée (7) et la surface concentrique (8) de la cloison (6). La virole (10), de section U, est munie d'un moyen de positionnement connu (11), transversal et longitudinal. La fraction liquide (12) s'échappant par l'interstice compris entre l'anneau de retenue (9) et la virole (10) est recueillie par un moyen de récupération (13).

Selon la figure 4, le dispositif est destiné à effectuer une retenue de la phase liquide entre la paroi fixe (2) et la pièce tournante (3) qui la traverse, partiellement immergée dans la phase liquide (1) selon le niveau (4).

Le dispositif comprend la cloison (6) ayant l'aspect d'une surface plane, solidaire de la pièce tournante (3) et perpendiculaire à son axe. La périphérie de la cloison (6) présente deux surfaces planes (7), jouant le rôle de portées et une surface concentrique (8) assujettie à la portée (7). L'anneau de retenue (9), ayant une section en forme de U, prend position sur les portées (7) et la surface concentrique (8) de la cloison (6). La virole (10), dont la section a l'aspect de la lettre U, est munie d'un moyen de positionnement connu (11), transversal et longitudinal. La fraction liquide (12) s'échappant par l'interstice compris entre l'anneau de retenue (9) et la virole (10) est recueillie par un moyen de récupération (13).

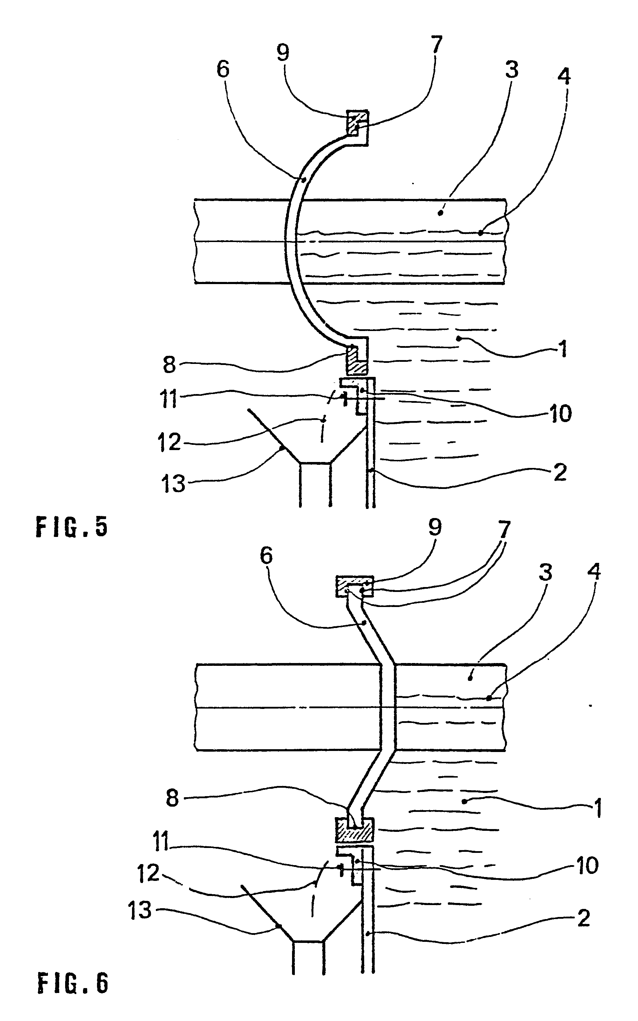

Selon la figure 5, le dispositif est destiné à effectuer une retenue de la phase liquide entre la paroi fixe (2) et la pièce tournante (3) qui la traverse et qui est partiellement immergée dans la phase liquide (1) selon le niveau (4).

Le dispositif comprend la cloison (6) ayant l'aspect d'une surface hémisphérique solidaire de la pièce tournante (3) et perpendiculaire à son axe. La périphérie de la cloison (6) présente une surface plane (7) jouant le rôle de portée et une surface concentrique (8) assujettie à la portée (7). L'anneau de retenue (9), de section ayant la forme de la lettre L, prend position sur la portée (7) et la surface concentrique (8) de la cloison (6). La virole (10), de section en L, est munie d'un moyen de positionnement connu (11) transversal et longitudinal. La fraction liquide (12) s'échappant par l'interstice compris entre l'anneau de retenue (9) et la virole (10) est recueillie par un moyen de récupération (13).

Selon la figure 6, le dispositif est destiné à effectuer une retenue de la phase liquide entre la paroi fixe (2) et la pièce tournante (3) qui la traverse et qui est partiellement immergée dans la phase liquide (1) selon le niveau (4).

Le dispositif comprend la cloison (6) ayant l'aspect d'une surface tronconique, solidaire de la pièce tournante (3) et perpendiculaire à son axe. La périphérie de la cloison (6) présente deux surfaces planes (7) jouant le rôle de portées et une surface concentrique (8) assujettie aux portées (7). L'anneau de retenue (9), de section ayant la forme de la lettre U, prend position sur les portées (7) et la surface concentrique (8) de la cloison (6). La virole (10), de section en L, est munie d'un moyen de positionnement connu (11), transversal et longitudinal. La fraction liquide (12) s'échappant par l'interstice compris entre l'anneau de retenue (9) et la virole (10) est recueillie par un moyen de récupération (13).

**Exemple 1** (illustré par la figure 1).

On a adapté sur un filtre rotatif à disques comportant: une cuve (2) ayant une capacité de 30 m³, un arbre d'entraînement cylindrique (3) ayant un diamètre de 0,6 mètre, sur lequel étaient montés en parallèle: sept disques de séparation des phases liquide et solide d'une suspension aqueuse de $Al(OH)_3$ ayant une concentration en matière sèche de 0,25 tonne par mètre cube.

L'arbre d'entraînement (3) était immergé pour 50 % de son diamètre dans la suspension.

Le diamètre de chaque disque était de 3,9 mètres.

Le dispositif selon l'invention comprenait une cloison plane (6) ayant un diamètre de 67 cm solidaire de l'arbre (3). La cloison plane était munie sur sa périphérie, d'une portée plane (7) et d'une portée cylindrique (8) adjacente à la portée (7). La cloison était en acier.

Un anneau de retenue (9), ayant une section en L et dont le diamètre extérieur était de 69,9 ± 0,1 cm, et le diamètre intérieur superieur à 60 cm disposant d'une épaisseur de 1 cm, était monté sur la portée (7) et la portée cylindrique (8). Cet anneau (9) était réalisé en néoprène.

Une virole (10) de diamètre interne 70,1 ± 0,1 cm de section U, était réglée longitudinalement et transversalement en position d'utilisation au moyen de la pièce de réglage (11) non décrite et de type connu, de telle manière que la fuite (12) de phase liquide soit rendue la plus faible. Dans cet exemple, le jeu maximum entre le rayon interne de la virole et le rayon externe de l'anneau était de 2 mm. Par ailleurs, la faible taille des solides ne permettait pas de dimensionner avec tolérance l'une et l'autre de ces deux pièces en fonction de la granulométrie moyenne de ces solides.

La fuite (12) était de 30 litres/heure, alors que la capacité de séparation du filtre était de 2,5 m³/h par mètre carré de surface filtrante.

**Exemple 2** (illustré par la figure 1):

On a adapté sur un filtre rotatif à disques comportant: une cuve (2) ayant une capacité de 5 m³, un arbre d'entraînement cylindrique (3) ayant un diamètre de 1,2 mètre, sur lequel étaient montés en parallèle trois dispues de séparation des phases liquide et solide d'une suspension aqueuse de Al(OH)₃ ayant une concentration en matière sèche de 0,25 tonne par mètre cube.

L'arbre d'entraînement (3) était immergé pour 50 % de son diamètre dans la suspisison.

Le diamètre de chaque disque était de 5,2 mètres.

Le dispositif selon l'invention comprenait une cloison plane (6) avant un diamètre de 130 cm, solidaire de l'abre (3). La cloison plane était munie sur sa périphérie d'une portée plane (7) et d'une portée cylindrique (8) adjacente à la portée (7). La cloison était en acier.

Un anneau de retenue (9) ayant une section en L et dont le diamètre extérieur était de 134,9 ± 0,1 cm et le diamètre intérieur de 124 ± 0,1 cm, disposant d'une épaisseur de 2 cm, était montée sur la portée (7) et la portée cylindrique (8). Cet anneau (9) était réalisé en néoprène.

Une virole (10) de diamètre interne 135,1 ± 0,1 cm de section U, était réglée longitudinalement et transversalement en position d'utilisation au moyen de la pièce de réglage (11) non décrite et de type connu, de telle manière que la fuite (12) de phase liquide soit rendue la plus faible. Dans cet exemple, le jeu maximum entre le rayon interne de la virole et le rayon externe de l'anneau était de 2 mm. Par ailleurs, la faible taille des solides ne permettait pas de dimensionner avec tolérance l'une et l'autre de ces deux pièces, en fonction de la granulométrie moyenne de ces solides.

La fuite (12) était de 50 litres/heure, alors que la capacité de séparation du filtre etait de 2,5 m/h par mètre carré de surface filtrante.

**Revendications**

1. Dispositif de retenue entre une paroi fixe (2) et une pièce tournante (3) la traversant, d'une phase liquide, éventuellement chargée en matériaux solides, dans le but de réaliser un joint éliminant les frottements en acceptant toutefois une fuite limitée de la phase liquide, caractérisé en ce que ce dispositif comporte:
   a) une cloison (6) solidaire de la pièce tournante (3) dont la périphérie présente au moins une portée plane (7) perpendiculaire à l'axe de rotation de la pièce tournante (3) et une portée cylindrique (8) dont l'axe de révolution est confondu avec l'axe de rotation de ladite pièce tournante et adjacente à la portée (7),
   b) un anneau de retenue (9) prenant position sur la portée plane (7) et la portée cylindrique (8) de la cloison solidaire de la pièce tournante (3),
   c) une virole (10) solidaire de la paroi (2) de diamètre interne au moins égal au diamètre externe de l'anneau (9), munie d'un moyen de positionnement longitudinal sur la paroi (2) selon l'axe de rotation de la pièce tournante (3) qui traverse cette paroi, d'un moyen de centrage par rapport à cette même pièce tournante et à l'anneau de retenue (9), enfin d'un moyen de blocage (11) interdisant tout déplacement de la virole.

2. Dispositif de retenue d'une phase liquide selon la revendication 1, caractérisé en ce que la cloison (6) solidaire de la pièce tournante (3) est choisie dans le groupe constitué par les surfaces plane, tronconique, hémisphérique convexe ou concave.

3. Dispositif de retenue d'une phase liquide selon les revendications 1 et 2, caractérisé en ce que l'anneau de retenue (9) a une section du type carré, rectangulaire, circulaire en L, T, U.

4. Dispositif de retenue d'une phase liquide selon l'une quelconque des revendications 1 à 3, caractérisé en ce que l'anneau de retanue (9) est réalisé en un matériau choisi dans le groupe constitué par les métaux et alliages usinés ou moulés, les matériaux polymères moulés tels que les polyamides, polyimides, polyesters, polymères, halogènes, caoutchouc.

5. Dispositif de retenue d'une phase liquide selon 1 une quelconque des revendications 1 à 4, caractérisé en ce que le recouvrement de l'anneau de retenue (9) par la virole (10) solidaire de la paroi fixe (2) circulaire est assurée au moins dans tout le secteur de ladite paroi fixe circulaire qui est immergé dans la suspension à filtrer.

6. Dispositif de retenue d'une phase liquide selon l'une quelconque des revendications 1 à 5, caractérisé en ce que la virole (10) a une section du type en L, T, U.

**Patentansprüche**

Vorrichtung zum Aufhalten einer Flüssigkeit zwischen einer ortsfesten Wand (2) und einem dadurchgehenden sich drehenden Teil (3), wobei die Flüssigkeit gegebenenfalls mit festen Körpern versetzt ist, um eine Reibungen verhindernde Verbindung zu schaffen, bei der eine begrenzte Leckrate der Flüssigkeit in Kauf genommen wird, gekennzeichnet durch
   a) eine mit dem sich drehenden Teil (3) starr verbundene Trennwand (6), deren Rand mindestens eine ebene Lagerfläche (7) aufweist, die senkrecht zur Drehachse des sich drehenden Teils (3) angeordnet ist und eine zylinderförmige Lagerfläche (8), deren Drehachse mit der Drehachse des sich drehenden Teils zusammenfällt und die an die Lagerfläche (7) anstößt,
   b) einen Rückhaltering (9), der auf der Lagerfläche (7) und der zylindrischen Lagerfläche (8) der Trennwand aufliegt, die mit dem sich drehenden Teil (3) starr verbunden ist, und
   c) einen Ring (10), der mit der Wandung (2) starr verbunden ist und mit einem Innendurchmesser, der mindestens gleich dem Außendurchmesser des Rings (9) ist, wobei der Ring mit Mitteln zur Längspositionierung auf der Wandung (2) in Richtung der Drehachse des sich drehenden Teils, das diese Wandung durchquert versehen ist und wobei der Ring mit einem Zentrierorgan versehen ist, zum Zentrieren des Rings gegenüber dem sich drehenden Teil und wobei der Ring ein Arretierorgan (11) aufweist, das die Verschiebung des Rings verhindert.

2. Vorrichtung nach Anspruch 1, dadurch gekennzeichnet, daß die Trennwand (6), die mit dem sich drehenden Teil (3) starr verbunden ist aus der Gruppe gewählt ist, die aus den Trennwänden mit ebenen, kegelstumpfförmigen oder konvex bzw. konkav halbkugelförmigen Oberflächen besteht.

3. Vorrichtung nach Anspruch 1 oder 2, dadurch gekennzeichnet, daß der Rückhaltering (9) einen quadratischen, rechteckigen, kreisförmigen, L-, T- oder U-förmigen Querschnitt hat.

4. Vorrichtung nach einem der Ansprüche 1 bis 3, dadurch gekennzeichnet, daß der Rückhaltering (9) aus einem Material gefertigt ist, das aus der Gruppe ausgewählt ist, die aus den spanend bearbeiteten oder gegossenen Metallen und Legierungen besteht, den gegossenen Polymeren wie z. B. den Polyamiden, Polyimiden, Polyester, Polymeren, Halogenen und Gummi.

5. Vorrichtung nach einem der Ansprüche 1 bis 4, dadurch gekennzeichnet, daß das Bedecken des Rückhalterings (9) durch den Ring (10), der mit der ortfesten kreisförmigen Wandung (2) starr verbunden ist mindestens auf dem gesamten Kreisausschnitt gewährleistet ist, der in die zu filternde Suspension eingetaucht ist.

6. Vorrichtung nach einem der Ansprüche 1 bis 5, dadurch gekennzeichnet, daß der Ring (10) einen L-, T-, U-förmigen Querschnitt hat.

**Claims**

1. A retaining apparatus between a fixed wall (2) and a rotary member (3) passing therethrough, for retaining a liquid phase which is possibly charged with solid materials, in order to provide a seal which eliminates friction while however accepting limited leakage of the liquid phase, characterised in that said apparatus comprises:

a) a partition member (6) which is fixed with respect to the rotary member (3) and the periphery of which has at least one planar bearing surface (7) which is perpendicular to the axis of rotation of the rotary member (3) and a cylindrical bearing surface (8) whose axis of revolution is coincident with the axis of rotation of said rotary member and adjacent to the bearing surface (7),

b) a retaining ring (9) which is positioned on the planar bearing surface (7) and the cylindrical bearing surface (8) of the partition member which is fixed with respect to the rotary member (3), and

c) a collar (10) which is fixed with respect to the wall (2), of an inside diameter that is at least equal to the outside diameter of the ring (9), and which is provided with a means for longitudinal positioning on the wall (2) along the axis of rotation of the rotary member (3) which passes through said wall, a means for centering with respect to said rotary member and the retaining ring (9), and finally a locking means (11) for preventing any displacement of the collar.

2. A liquid phase retaining apparatus according to claim 1 characterised in that the partition member (6) which is fixed with respect to the rotary member (3) is selected from the group formed by planar, frustoconical, and hemispherical convex or concave surfaces.

3. A liquid phase retaining apparatus according to claims 1 and 2 characterised in that the retaining ring (9) is of a section of square, rectangular, circular, L, T and U tvpe.

4. A liquid phase retaining apparatus according to any one of claims 1 to 3 characterised in that the retaining ring (9) is made of a material selected from the group formed by metals and alloys which are machined or cast, moulded polymer materials such as polyamides, polyimides, polyesters, halogenated polymers and rubber.

5. A liquid phase retaining apparatus according to any one of claims 1 to 4 characterised in that the retaining ring (9) is covered by the collar (10) which is fixed with respect to the circular fixed wall (2), at least in the whole of the sector of said fixed circular wall which is immersed in the suspension to be filtered.

6. A liquid phase retaining apparatus according to any one of claims 1 to 5 characterised in that the section of the collar (10) is of L, T or U type.

**FIG.1**

FIG.2

FIG.3

FIG.4

FIG. 5

FIG. 6